Europäisches Patentamt

(19) European Patent Office    (11) Publication number: **0 033 333**
                                                    **B1**
Office européen des brevets

(12) **EUROPEAN PATENT SPECIFICATION**

(45) Date of publication of patent specification: **02.01.86**    (51) Int. Cl.⁴: **B 29 C 45/16,** B 29 C 45/22,
                                                                            B 29 C 45/23, B 29 C 45/77,
(21) Application number: **80901578.7**                                        B 29 C 45/82, B 32 B 1/02,
                                                                            B 32 B 1/10
(22) Date of filing: **02.06.80**

(86) International application number:
**PCT/US80/00678**

(87) International publication number:
**WO 81/00231 05.02.81 Gazette 81/04**

(54) **APPARATUS FOR MAKING A MULTI-LAYER INJECTION MOLDED ARTICLE.**

(30) Priority: **20.07.79 US 59375**

(43) Date of publication of application:
**12.08.81 Bulletin 81/32**

(45) Publication of the grant of the patent:
**02.01.86 Bulletin 86/01**

(84) Designated Contracting States:
**FR**

(56) References cited:
**AU-B-2 693 871**
**GB-A-1 362 133**
**JP-A-51 109 952**
**US-A-2 627 087**
**US-A-3 767 339**
**US-A-3 785 116**
**US-A-3 857 658**
**US-A-3 870 448**
**US-A-4 035 466**
**US-A-4 052 497**
**US-A-4 174 413**

(73) Proprietor: **AMERICAN CAN COMPANY**
**American Lane**
**Greenwich, Connecticut 06830 (US)**

(72) Inventor: **McHENRY, Robert J.**
**4N030 Thornly Road**
**St. Charles, IL 60174 (US)**
Inventor: **RYAN, Martin A.**
**5236 Wyntercreek Way**
**Dunwoody Georgia 30338 (US)**

(74) Representative: **Phélip, Bruno et al**
**c/o Cabinet Harlé & Phélip 21, rue de la**
**Rochefoucauld**
**F-75009 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an apparatus for making a multilayer injection molded article.

Food product rigid containers generally must be impermeable to oxygen. Most common structural polymers for rigid food containers are permeable to oxygen which invades the food product causing degradation or spoilage. Those polymers which are sufficiently impermeable to oxygen generally are not suitable alone for rigid containers for foods because they do not possess adequate structural properties, are moisture sensitive, or are not approved for or are of questionable safety when used in contact with foods. Ethylene vinyl alcohol copolymer (EVOH) is a transparent extrusible material possessing high impermeability to oxygen when dry, many times less permeable than acrylonitrile copolymers, but is very moisture sensitive. The oxygen barrier properties of EVOH are markedly diminished in the presence of significant quantities of water. To be useful for food packaging, particularly where extended shelf life is required, EVOH must be kept dry as by total encapsulation within polymers which have good moisture barrier properties.

Many foods are processed in the container in a pressure cooker or retort. Retort conditions commonly are 121°C. at 2,1 kg/cm$^2$ steam pressure. A rigid container must survive retort conditions. It must not permanently distort during cooking or during cooling, and must not suffer an alteration of the desirable properties of its components. Polyolefins, particularly blends or copolymers of polypropylene and polyethylene, are well suited to manufacture of rigid containers and have adequate physical properties to survive retorting. Polyolefins are relatively poor oxygen barriers, but are relatively good moisture barriers. The use of polyolefins with a central core of an oxygen barrier polymer is a desired goal of the food packaging industry.

U.S. Patent 3,882,259 discloses a three ply plastic bottle having a core of EVOH blended with Surlyn A brand ionomer resin and outer plies of polyethylene blended with Surlyn A®. The Surlyn A ionomer is added to both the EVOH and the polyethylene resin materials to improve adhesion between layers. The bottle is to be made by extrusion blow molding whereby the three layers are simultaneously extruded to produce a three ply tube. While still hot from extrusion, the tube is pinched together at the bottom to form a seal and inflated in a blow mold having the shape of the desired bottle.

Extrusion blow molding has four serious drawbacks when used to form multi-layer containers having a core ply of a moisture sensitive barrier material such as EVOH.

First, the pinch seal at the bottom leaves the core ply of EVOH exposed on the bottle exterior. Since EVOH and certain other barrier materials are adversely affected by moisture, exposure of the core ply at the container bottom renders the container susceptible to loss of barrier quality by intrusion of moisture. The risk that the container exterior will encounter damp conditions in storage or transport is high and the resulting loss of barrier quality will degrade or spoil the food. Further, retort conditions are such that moisture from the steam will intrude into the barrier layer through the exposed barrier at the bottom.

Second, extrusion blow molding necessarily produces scrap as a result of the pinch sealing procedure. Since the scrap contains materials from each of the three layers, reextrusion of the scrap is difficult and expensive.

Third, the pinch seal produces a bottom of non-uniform thickness and strength. The sealing takes place along a line between the abutting faces of the inner layer material. The seal line is bordered by regions of relatively thick material. When stretched during blow molding, the bottom varies in thickness in the vicinity of the pinch seal. Because of the thickness variation due to the pinch seal, the stiffness of the bottom is not uniform along all diameters. Consequently, the bottom does not evenly respond to expansion and contraction as the product changes in temperature. This lack of even response causes unpredictable performance of the container when retorted.

Fourth, the pinch seal may create an interruption in the barrier layer. If the inside surface layer is interposed between the barrier layer at the seal, a line lacking barrier material will result. The area of the interruption may be great enough to allow sufficient oxygen to enter to be a problem.

Because of these disadvantages, extrusion blow molding cannot produce an entirely satisfactory three layer rigid container having a core barrier layer of a moisture sensitive polymer such as EVOH, particularly where the container is intended for retorting.

The most pertinent prior art is US Patent 4.035.466 from which claim has been drafted. US Patent 4.035.466 relates to a method and an apparatus for injection molding plastic bodies having a filling compound and a surrounding cover layer. The composition of the filling compound is different from the composition of the surrounding cover layer.

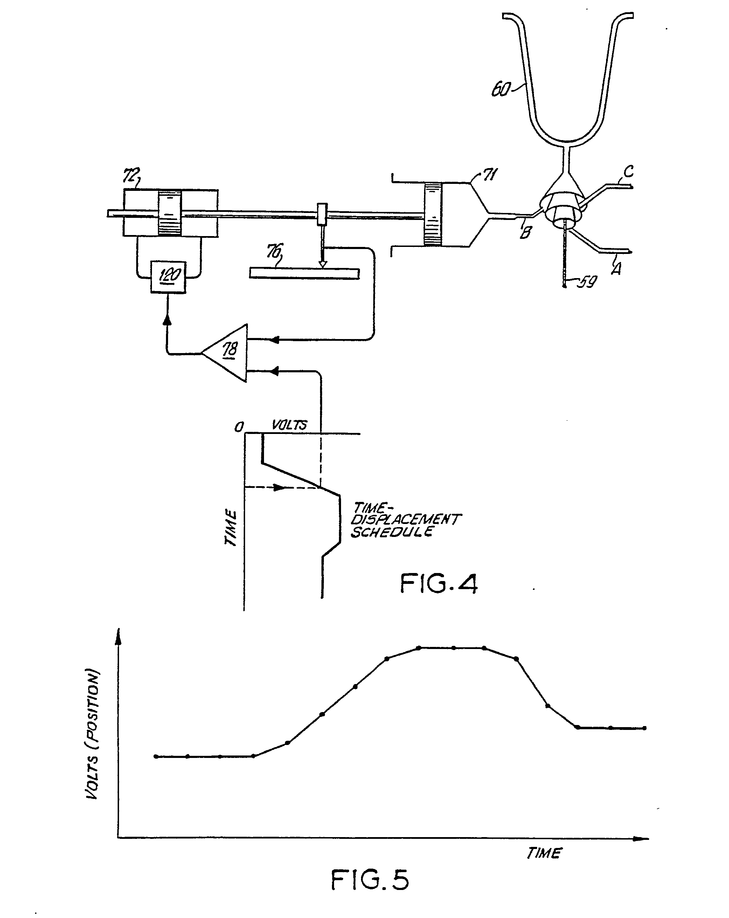

More particularly said US patent describes an apparatus provided with three extruders 22, 23, 24, which introduce both plastic materials (the filling compound and the cover layer) in a specific nozzle structure. The cover material plastic is fed from two extruders 22, 24 through annular channels 8, 10, while the filling material is fed by an extruder 23 through an annular channel 19. The obtained injection molded multilayer article according to said US patent has not a continuous core layer completely encapsulated within outer layers. As shown in figure 4, cover layer 26 interrupts core layer material 27 at the sprue.

Said US patent 4.035.466 does not teach, suggest, mention, desire or appreciate need for independently controlling and varying rate of flow of each three polymer streams, during each injection cycle. US patent 4.035.466 no desire to change flow rate of polymer streams during injection cycle. US patent 4.035.466 concerned with uniform flow and thickness, not varied flow and thickness, during injection cycle. US patent 4.035.466 desires, and his apparatus achieves, uniform flow and thickness. (col. 1, lines 49—52—col. 2, lines 6—12, lines 41—44—col. 3, lines 27—30). US patent 4.035.466 apparatus designed with control possibilities which provide for possibility of guaranteeing uniform flow of cover layer material through (outermost) annular sleeve channel 8 and filler material through (intermediate) annular channel 10 (col. 5, lines 36—38). Screws 17 and washers 18 set bushings 16 and 20 for fixed, not variable, annular flow channel and orifice or slot 28 dimensions for channels 8 and 10 (col. 5, lines 20—35). Since US patent 4.035.466 guarantees uniform flow of filler material through channel 10 (col. 5 lines 36—38) axial movement capability of cylinder 9 used only to start and stop not vary flow of filler material. There is not disclosure or desire or control or variation of flow of cover material through bore hole passage 11 of cylinder 9. That US patent 4.035.466 employs fixed flow rate during injection cycle for particular article born out by his selection of "A" higher injection pressure and "A" higher injection rate, i.e. one pressure and one rate, during the cycle to form thick-walled article (col. 5, lines 60—63), and likewise with respect to "A" higher temperature and "A" lower for a thin cover layered article (col. 6, lines 4—11), and/or by selection of flow properties of plastic materials used (col. 6, lines 12—18 and lines 34—37). US patent 4.035.466 varies flow by changing material. Thus US patent 4.035.466 is totally directed only toward uniform flow and thickness. US patent 4.035.466 contains no desire, suggestion or hint of any desire to, or suggestion of apparatus for controlling and varying rates of flow of any polymer streams during injection cycle.

US patent 4.035.466 apparatus produces an inner layer which is thick and discontinuous (fig. 4), and would not be suitable for the expensive oxygen barrier inner layer for containers for highly oxygen-sensitive foodstuffs.

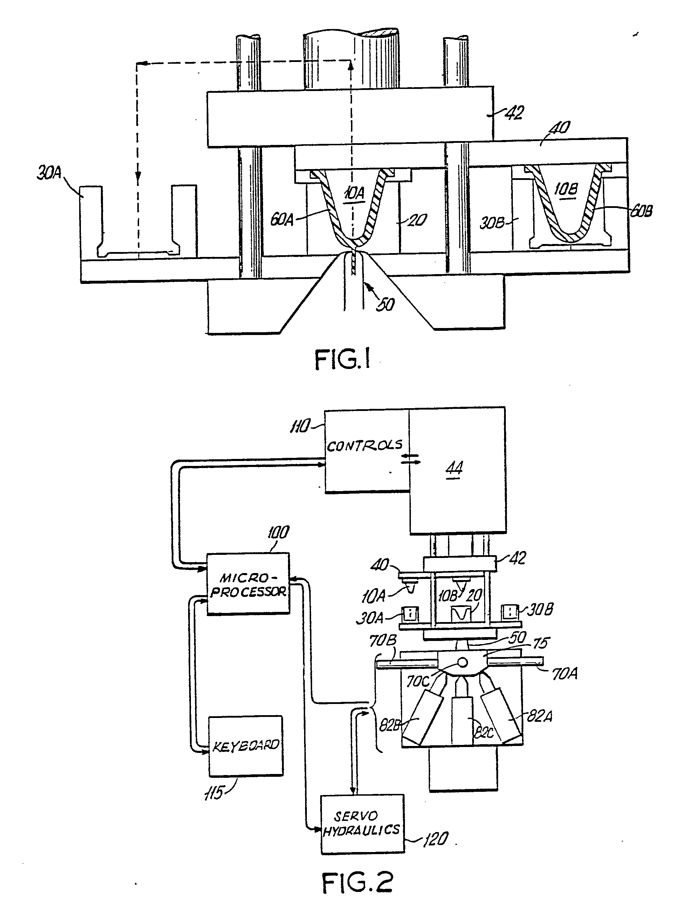

US. patent 4.052.497 relates to a method and an apparatus for injection molding of articles composed of at least three distinct materials coated one over the other. The apparatus comprises three extruders feeding an injection nozzle. As shown in figure 2, the injection nozzle is constructed in such a way that only one stream of polymer material can flow at a time. Material F3 from plastification unit 8 for the third material to be injected is the last stream of polymer material to be injected into the mold. This third material forms the core and it penetrates into the interior of the second material (see column 1 lines 60—64). Because the last injected stream forms the core layer, it is exposed at the sprue and is therefore not completely encapsulated.

The present invention relates to a multi-layer injection molding machine for making a multi-layer injection molded article, comprising a co-injection nozzle, means for supplying the flow of a first polymer stream through the nozzle to become one surface layer of the article, means for supplying the flow of a second polymer stream to become the other surface layer of the article, means for supplying the flow of a third polymer stream between the first and second substance streams characterized in that it further comprises means for automatically initiating and co-ordinating the commencement, flow rate and termination of the flows of the said polymer streams during each injection cycle according to a pre-determined sequence and means responsive to the initiating and co-ordinating means for activating the independently operable supply means to produce the pre-determined sequence of flows of the different polymer streams.

The present invention is concerned with apparatus for making a plastic container by injection molding or by an injection blow molding technique which produces a container whose walls are multiple plies of different polymers. In particular, the container walls comprise inner and outer layers of structural polymers such as polyolefins or a blend of polyolefins on either side of a core layer of a polymer having oxygen barrier properties such as EVOH.

Injection blow molding is a process whereby a preform or parison is formed by injection molding in a cavity. The parison is transferred to a blow mold cavity and blown to the shape of the desired container. The parison can be retained on the core pin of the injection mold and transferred on the core pin to the blow molding cavity. The parison can be temperature conditioned before blow molding to achieve an optimum temperature or profile of temperatures. The core pin can be temperature controlled and the exterior of the parison can be temperature conditioned by contact with air or other fluid such that blow molding occurs at optimal conditions. Orientation can be achieved as the parison is stretched during blow molding. Injection blow molding produces no scrape and requires no pinch seal.

According to the present invention, polymer melts for the inside and outside surface layers and the core layers of the container walls may be substantially simultaneously injected into a parison mold cavity through an injection nozzle having separate passages for each polymer melt arranged to lead coaxial annular nozzle orifices surrounding the central orifice. Additional layers or layers interposed between the surface and core layers can also be injected simultaneously to produce a container wall having four or more layers.

The initiation, rate, and termination of flow for each layer may be independently and continuously controlled to provide control over the thickness of each layer and to insure that the core layer or layers are totally encapsulated between the surface layers. The injection molded parison is transferred on the core pin to a blow mold cavity having the shape of the container and is then blow molded into the finished container. Temperature conditioning of the parison just prior to blowing can result in biaxial orientation of the various polymers to achieve desirable improvements in physical properties such as impermeability, clarity, tensile strength, impact strength, and resistance to creep. The resulting product has a barrier layer of layers which extend without interruption throughout the container, yet are completely encapsulated within the material of the inside and outside surface layers. Since the barrier layer is protected from moisture by the moisture barrier properties of the surface layers the oxygen barrier quality is preserved.

The multilayer injection molding machine is disclosed hereinafter with reference to the attached drawings. The method of molding herein described is the basis for a method claimed in the applicant's application (WO—A—81/00230) having the same priority and designating the same States.

In the drawings:

Figure 1 is a schematic view in cross-section of injection blow molding apparatus,

Figure 2 is a schematic view of the apparatus of the present invention,

Figure 3 is a simplified view of the injection apparatus of the present invention,

Figure 4 is a schematic view illustrating the control system for one of the injection rams,

Figure 5 is a plot of the position of one of the injection rams as a function of time,

Figure 6 is a flow chart for the control system for the apparatus,

Figure 7 is a plot of ram position as a function of time for three rams,

Figures 8—15 are views in cross-section taken through the nozzle and cavity showing the confluence of flow of the various layers at various times during the injection cycle,

Figure 16 is a view in cross-section of the injection nozzle,

Figure 17 is a view in cross-section of the parison,

Figure 18 is a view in cross-section of the finished container,

Figure 19 is an enlarged view of a portion of a container wall having three layers,

Figure 20 is a plot of the oxygen permeability of a barrier material as a function of moisture content, and

Figure 21 is an enlarged view of a portion of a container wall having five layers.

The machine of the present invention injection molds a multi-layer parison from a plurality of polymers, each separately plasticated and fed to separate injection rams. The rams each force a shot of polymer to appropriate nozzle passages which lead to the entrance to the injection mold cavity. Conditions are controlled to advance the several polymer melts substantially simultaneously in the die cavity under non-turbulent flow conditions to preserve the polymers as discrete layers in the parison. The following detailed description explains how the foregoing is accomplished.

Figure 1 shows a portion of the injection blow molding machine (IBM) of the present invention. Two core pins 10A, 10B are mounted on a transversely moveable plate 40 on the axially moveable platen 42 of the machine. Core pin 10A is positioned in an injection mold 20 while core pin 10B is positioned in a blow mold 30B. When plate 40 is traversed to the left, core pin 10A will be in blow mold 30A and core pin 10B will be in the injection mold 20. A parison is removed from the mold by axial retreat of the moveable platen 42 and the plate 40 with core pins 10 is traversed either left or right to the available blow mold. Figure 1 shows blow mold 30A ready to receive the parison and shows blow mold 30B containing a parison 60B. Parison 60B is inflated with air to assume the shape of blow molding cavity 30B while parison 60A is being injected in cavity 20. The blow molds open as the platen retreats to eject the finished container. The plate 40 shuttles back and forth each cycle so that a container is blown simultaneously each time a parison is injected.

Figure 2 shows the general layout of the injection blow molding machine and indicates the control means. Plasticators 82A, 82B, 82C feed three rams 70A, 70B, 70C for three polymer melts which are fed to a manifold block 75 which contains separate passages leading to a multi-passage nozzle 50 for the injection mold 20. The platen 42 is moved axially of the mold by a hydraulic press 44. Control circuitry means for the press and blowing cycles are indicated at press control block 110. A microprocessor 100 is programmed to control the servo hydraulics 120 which control the individual injection rams and to command the press control block 110.

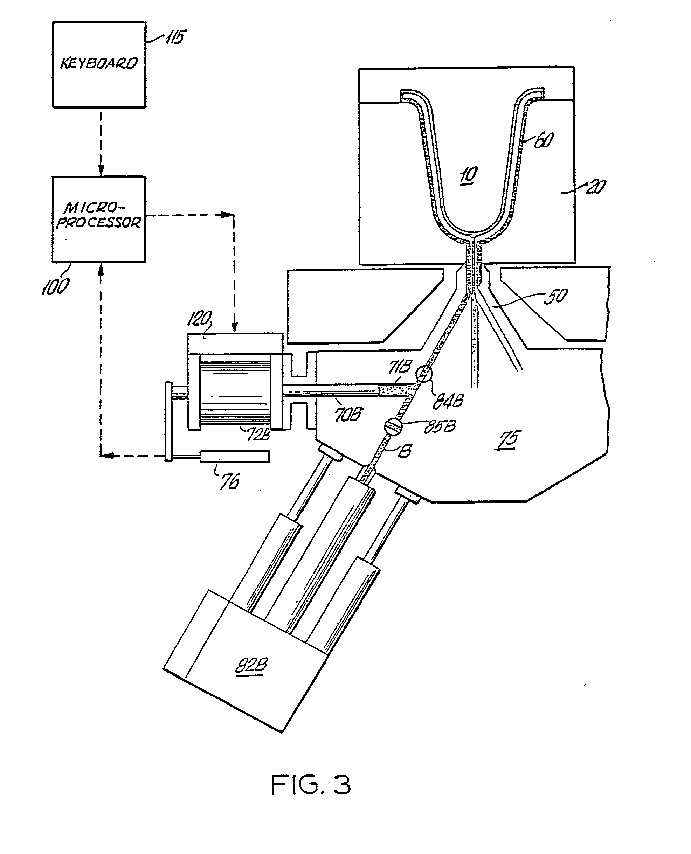

Figure 3 shows one of the plural plasticators 82B for melting and supplying molten polymer B to an injection ram 70B. The plasticator 82B is a conventional reciprocating screw device which forces molten polymer into the cylinder 71B of the ram when manifold valve 84B is closed and manifold valve 85B is opened and the ram is retreated to the left by hydraulic actuator 72B. When the ram cylinder 71B is charged with molten resin, valve 85B is closed. Upon a control signal from the microprocessor 100, valve 84B is opened and the servo control 120 for the ram causes the ram to advance to the right, according to a displacement time schedule stored in the microprocessor program. A displacement transducer 76 provides an analog signal proportional to ram displacement to complete a feed-back loop for the servo 120. Polymer B forced according to the program flows past valve 84B through the manifold passages to the injection nozzle, through the nozzle passages and into the injection mold cavity where polymer B becomes the outside layer of a parison 60.

Figure 4 shows schematically the servo loop where the control signal from the microprocessor 100 (shown as voltage as a function of time) and a position signal from the displacement tranducer 76 are algebraically combined in an amplifier 78 and the resulting signal is used to control the hydraulic servo 120 for the hydraulic actuator 72. A typical ram position control signal is shown in Figure 5. Since displacement is measured by transducer 76, the plot is in voltage as a function of time.

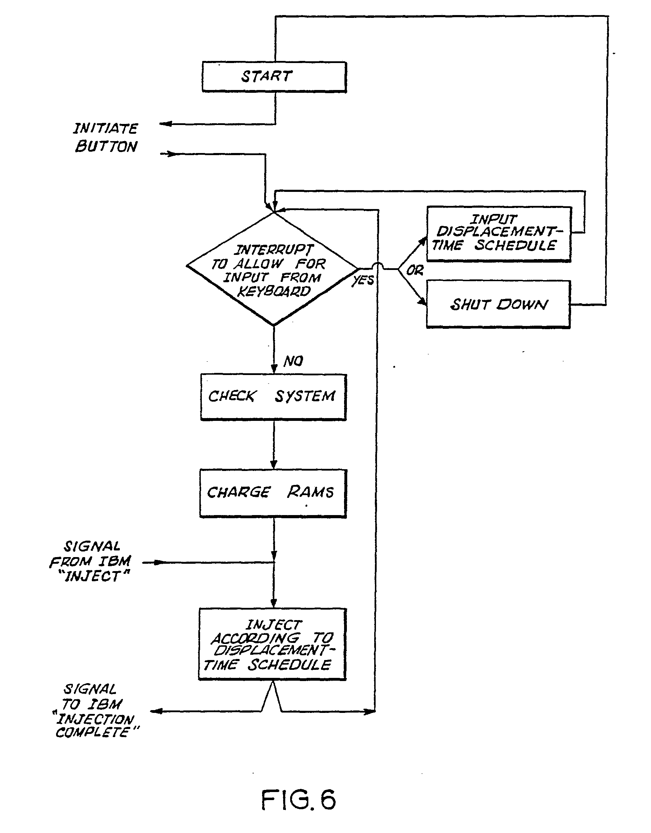

Figure 6 is a flow chart of the system used to control the machine. The injection blow molding machine is indicated as IBM on the chart. Upon initiation of the cycle, the program checks positions of valves, rams, etc. and if all are proper, recharges the ram cylinders 71 from the plasticators 82. The IBM control circuit 100 provides an "inject" signal to the microprocessor 100. Injection is carried out according to the ram displacement-time schedule of the microprocessor and is terminated at the end of the schedule. An "injection complete" signal is sent to the IBM. The control 110 then causes the IBM to traverse to place the parison in the blow mold and to proceed with the blow molding phase. The machine continues to cycle through this sequence. Keyboard 115 may be used to change the displacement-time schedule or to shut down the machine.

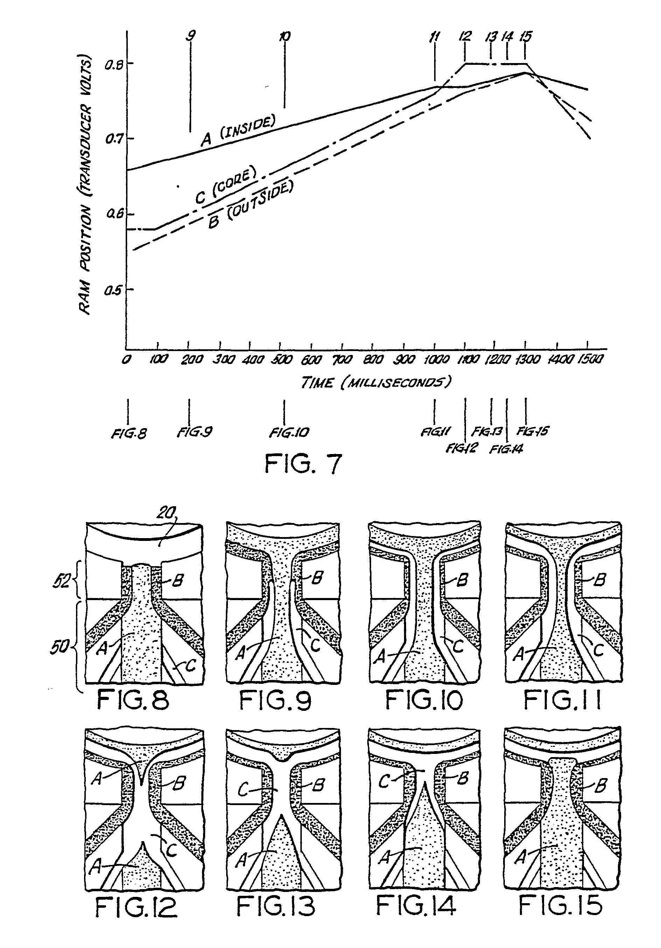

Figure 7 is a plot of ram displacement as a function of time for three rams. The positions of the rams are measured as the voltage analog output of the transducers 76 for each ram. The polymer for the inside surface layer is "A"; that for the core layer "C"; and that for the outside surface layer is "B". In this figure an upward slope indicates a forward motion of the ram to deliver polymer, a horizontal slope indicates a stopped ram, and a downward slope indicates a retreat of the ram. The significance of Figure 7 is perhaps better understood by reference to Figures 8—15, which show the flow of the polymers at the exit of the nozzle 50 and the entrance 52 of the injection mold cavity 20 at the rounded bottom of the parison. Figures 8—15 are taken at different times in the cycle and those times are keyed to Figure 7.

Figure 8 represents the conditions at the start of a cycle at time 0. The cavity 20 is empty. The entrance 52 of the cavity 20 initially contains only the polymers A and B for the inside and outside surface layers. The rams for polymers A and B begin to advance to force those polymers into the cavity. At about 100 milliseconds into the cycle the ram for the core layer, polymer C, begins to advance. Figure 9 shows that polymer C has joined the flow stream in the entrance and polymer C is about to enter the cavity. Figure 10, taken at about 520 milliseconds, shows the flow of the three polymers as the cavity continues to be filled. All three polymer layers must extend throughout the entire length of the parison. Since the flow in the mold cavity is laminar, the velocity in the middle of the stream is higher than the velocities at the cavity walls. Therefore, initiation of flow of polymer C is retarded enough (e.g., about 100 milliseconds) so that polymer C will reach the far end of the cavity just as the slower moving surface layers (A and B) reach the end. In this way, the far end of the parison, that which becomes the mouth end of the container, will have all layers present in their proper positions.

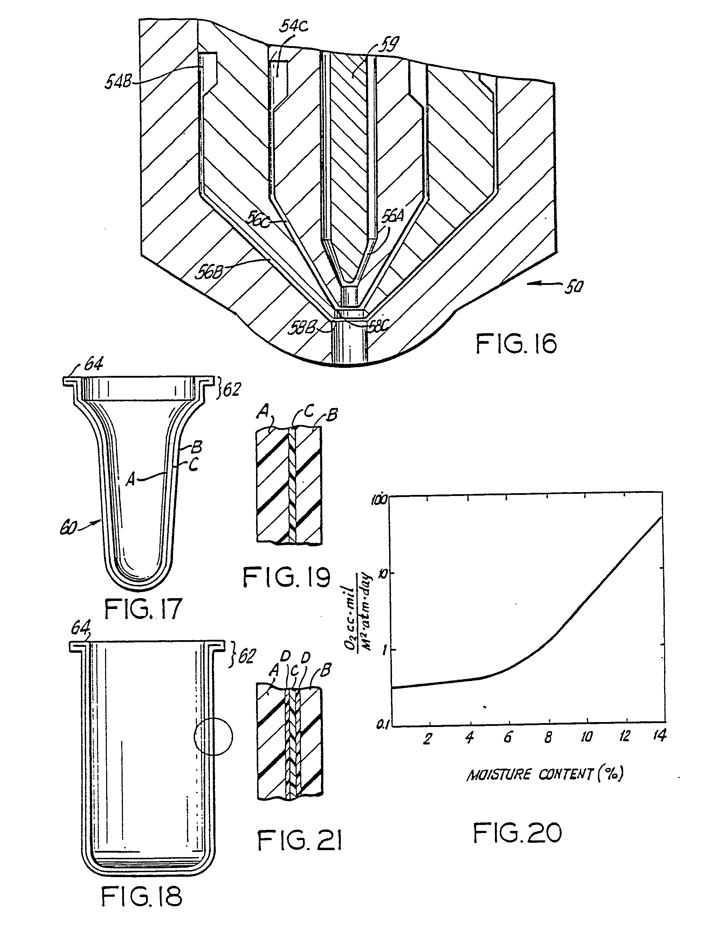

At about 1000 milliseconds into the injection cycle, the ram for polymer A (the inside surface layer) is stopped and the ram for polymer C (the core layer) can be accelerated slightly to achieve the desired thickness of material in the bottom of the container. Polymer A is necked down in the entrance 52 is shown in Figure 11 until it effectively is severed as shown in Figure 12. At 1100 milliseconds the ram for polymer C is stopped and the ram for polymer A is restarted. Figures 13 and 14 show polymer A advancing to pinch off polymer C in the entrance, thereby pushing the last of polymer C into the cavity 20 with polymer A to bury or encapsulate to isolate polymer C from exposure at the surface of the parison. Figure 15 shows polymer A knit to polymer B at the entrance to complete the encapsulation of polymer C and to return to the conditions at the start as shown in Figure 8. At the time of Figure 15 (1300 milliseconds) all three rams are retreated to depressurize the cavity to prevent expansion of the parison when the cavity is opened and to depressurize the polymers remaining in the nozzle and entrance to prevent exudation from the nozzle while the cavity is open. This exudation leads to premature flow of polymers into the cavity during the next cycle which can lead to smearing of polymer C on the surfaces of the container.

1500 milliseconds marks the end of the injection phase of the machine cycle for this example. Subsequent to the end of the injection phase of the cycle, manifold valves 84, 85 are actuated and the ram cylinders 71 are recharged with their polymers by the plasticators 82. The injection mold is opened by retreating the hydraulic press 44 to withdraw the core pin 10 from the cavity 20. The parison just formed is transferred to one of the blow mold cavities 30A, 30B and the container which was blow molded simultaneously with the injection cycle is ejected from the blow mold in which it was finished.

Figure 16 shows a nozzle 50 appropriate for injection of a parison having a three layer wall. Polymer B, which forms the outside surface layer, is delivered by the ram 70B to an annular distribution channel 54B which distributes the polymer circumferentially of the nozzle structure. Polymer B advances along a conical passage 56B to an annular orifice 58B at the exit of the nozzle which leads to the injection cavity. Similarly, polymer C, which forms the core layer, is delivered by ram 70C to annular distribution channel 54C and thence along conical passage 56C to annular orifice 58C. Polymer A, which forms the inside surface layer, is delivered by the ram 70A to a passage 56A which exits at the center of the concentric flows issuing from orifices 58B and 58C. A nozzle shut off valve 59 can be moved axially to arrest flow of polymer A.

Figures 17 and 18 compare the parison 60 as injection molded with the finished container. The neck portion 62 remains virtually unchanged during blow molding. The parison is held by the chilled neck portion while the hot and soft parison is blown. Thus, the neck 62 including the flange 64 is essentially formed in the injection mold. The remainder of the parison walls are thinned as the parison is stretched during blow molding.

Figure 18 shows that the core layer C extends throughout the flange 64, but does not penetrate the flange edge. This is accomplished in large part by selection of the delay time in starting the ram for the core polymer. The flange 64 will be employed in a double seam seal when a metal end is crimped, by well known techniques, onto the container mouth to close the filled container. Since the flange represents a significant area, it is important that the core layer extend well into the flange. The programmed flows of the various polymers also ensure that the core layer is not exposed at the sprue mark at the central exterior of the container.

Figure 19 is an enlargement of the container wall within the circle of Figure 18. Layer A is the inside surface layer formed from polymer A in the foregoing description. Layer B is the outside surface layer, formed from polymer B. Layer C is the core or barrier layer formed from polymer C. The thinnest layer is the relatively expensive barrier polymer C. The relative thickness of the three layers is controlled by controlling the relative flow rates of the three polymers by microprocessor control of the displacement rates of the rams. A preferred wall structure is a layer of a blend of high density polyethylene and polypropylene on each face of a core barrier layer of ethylene vinyl alcohol copolymer (EVOH).

Figure 20 shows how the oxygen barrier quality of the EVOH layer is thin, only a small quantity of water will cause a large increase in oxygen permeability. For this reason, the EVOH layer must adequately be protected against the intrusion of moisture.

Polyolefins do not adhere well to EVOH. Adhesion can be improved by adding adhesion promotors to the polyolefin, the EVOH or both. Another approach is to provide an intermediate layer of an adherent polymeric material which adheres to the polyolefin and the EVOH. Such materials include modified polyolefins sold under the name Plexar® by the Chemplex Company of Rolling Meadows, Illinois. These comprise a blend of a polyolefin and a graft copolymer of high density polyethylene and an unsaturated fused ring carboxylic acid anhydride. The polyolefin component of the blend can be polyethylene or preferably is an olefin copolymer such as ethylene vinyl acetate. In the past man has already taught the use of these materials to bond to EVOH. The materials themselves are disclosed in U.S. patents 4,087,587 and 4,087,588. We have found these modified polyolefins to be suitable as interlayers to improve adhesion between the polyolefin surface layers and the EVOH core layer. Another suitable material for use as an interlayer to improve adhesion between the EVOH polyolefins are maleic anhydride grafted polyolefins sold under the name Admer® by Mitsui Petrochemical Industries of Tokyo, Japan.

The use of interlayers on each side of the EVOH oxygen barrier layer results in a five layer container. To produce such a container, the three passage nozzle of Figure 16 is replaced with a five passage nozzle of similar construction. Where the inside and outside surface layers are of the same polymer one ram can be used for both those layers. The flow from that ram is divided and proportioned with part supplying the central axial passageway to form the inside surface layer and the balance supplying the outermost nozzle annular orifice. The two additional nozzle orifices are located just inside and just outside the nozzle orifice for the EVOH barrier layer. The two additional annular nozzle orifices can be supplied with the interlayer polymer from a single ram, the flow being divided and proportioned. Thus, a three ram machine can produce a five layer parison. Greater control can be exercised over the polymer flows by using a machine with an independently controllable ram for each layer. A nozzle shut off valve can be employed to selectively control the polymer flows. The three layers of interlayer polymer and the barrier polymer can be treated as a single core layer. A five layer wall is shown in Figure 21 wherein layers A and B are the inside surface layers of polyolefin, layer C is the barrier layer of EVOH, and two layers D are the interlayer material.

Example I

Five layer containers have a capacity of about 163 ml, of 3,1 cm×5,9 cm, weighing about 11 g were made using a five orifice nozzle on a three ram machine. The inside and outside surface layers were polypropylene-polyethylene block copolymer (Hercules Profax 7631). The adhesive interlayers were ethylene vinyl acetate copolymer blended with a graft copolymer of high density polyethylene and a fused ring carboxylic acid anhydride (Plexar 1615-2)®. The oxygen barrier was EVOH (Kuraray EVAL EP—F®, available from Kuraray Co. Ltd., Osaka, Japan). The layers were well adhered. The barrier extended to the flange lip and was completely encapsulated.

Example II

Five layer containers similar to those of Example I were made wherein the inside and outside surface layers were polypropylene (EXXON E612)®; the interlayer material was Plexar III®, a blend of ethylene vinyl acetate copolymer and a graft copolymer; and the barrier was EVAL EP—F®. The layers were well adhered. The barrier layer extended to the lip of the flange and was completely encapsulated.

Example III

Five layer containers similar of those of Example I were made wherein the inside and outside surface layers were a 50—50 blend of polypropylene (EXXON E612)® and high density polyethylene (Chemplex 5701)®; the interlayer material was Plexar III®; and the barrier layer was EVAL EP—F®. The layers were well adhered. The barrier layer extended to the lip of the flange and was completely encapsulated.

Example IV

Five layer containers similar to those of Example I were made wherein the inside and outside surface layers were a copolymer of propylene and ethylene (Hercules Profax 7631)®; the interlayer material was maleic anhydride grafted polyolefin (Mitsui Admer QB 530)®; and the barrier layer was EVAL EP—F®. The layers were well adhered. The barrier layer extended to the lip of the flange and was completely encapsulated.

In the making of the containers of Example I—IV the injection schedule began feeding the inside and outside surface layer polymer then the polymer for the adhesive interlayer was started and substantially simultaneously the barrier layer polymer was started. The flows of the adhesive interlayer polymer and the barrier layer polymer were terminated before the outside surface layer polymer flow was terminated.

Claims

1. A multi-layer injection molding machine for making a multi-layer injection molded article, comprising a co-injection nozzle (50), means (70A, 56A, 82A, 84A, 85A) for supplying the flow of a first polymer stream (A) through the nozzle (50) to become one surface layer of the article, means (70B, 54B, 56B, 58B, 82B, 84B, 85B) for supplying the flow of a second polymer stream (B) to become the other surface layer of the article, means (70C, 54C, 56C, 58C, 82C, 84C, 85C) for supplying the flow of a third polymer stream (C) between the first and second substance streams (A, B) characterized in that it further comprises means (100) for automatically initiating and co-ordinating the commencement, flowrate and termination of the flows of the said polymer streams (A, B, C) during each injection cycle according to a predetermined sequence and means (120) responsive to the initiating and co-ordinating means (100) for activating the independently operable supply means to produce the pre-determined sequence of flows of the different polymer streams (A, B, C).

2. Machine according to claim 1, characterized in that means (100) is operable to terminate the flow of the first polymer stream (A) prior to the termination of the second polymer (B).

3. Machine according to any one of claims 1 or 2, characterized in that the means (120) associated with means (100) permits the termination of the first polymer stream (A) and re-initiation of the flow of the first polymer stream (A) prior to terminating the flow of the polymer stream (B) forming the outside surface layer of the article.

4. Machine according to any one of claims 1 to 3, characterized in that means (120) associated with means (100) permits the inner layer (C) to be continuous and completely encapsulated in the article.

Patentansprüche

1. Mehrschicht-Spritzgiessmaschine zur Herstellung eines Mehrschicht-Spritzgussteils, mit einer Mehrkomponenten-Spritzgiessdüse (50), Zuflussvorrichtungen (70A, 56A, 82A, 84A, 85A) für einen ersten Polymerstrom (A) durch die Düse (50), der die eine Oberflächenschicht des Teils bildet, Zuflussvorrichtungen (70B, 54B, 56B, 58B, 82B, 84B, 85B) für einen zweiten Polymerstrom (B), der die andere Oberflächenschicht des Teils bildet, und Zuflussvorrichtungen (70C, 54C, 56C, 58C, 82C, 84C, 85C) für einen dritten Polymerstrom (C) zwischen den ersten und zweiten Materialströmen (A, B), dadurch gekennzeichnet, dass sie ferner Vorrichtungen (100) zur automatischen Auslösung und Abstimmung des Beginns, des Durchsatzes und der Beendigung der Durchflussmengen der besagten Polymerströme (A, B, C) bei jedem Spritzzyklus gemäss einem vorgegebenen Ablauf sowie von den Auslöse- und Abstimmvorrichtungen (100) beeinflusste Vorrichtungen (120) zur Inbetriebsetzung der unabhängig voneinander betätigbaren Zufuhrvorrichtungen umfasst, um den vorgegebenen Ablauf der Strömungen der verschiedenen Polymerströme (A, B, C) zu bewirken.

2. Maschine nach Anspruch 1, dadurch gekennzeichnet, dass die Vorrichtungen (100) so betrieben werden können, dass sie die Strömung des ersten Polymerstroms (A) vor der Beendigung des zweiten Polymerstroms (B) beendigen.

3. Maschine nach einem der Ansprüche 1 oder 2, dadurch gekennzeichnet, dass die den Vorrichtungen (100) zugeordneten Vorrichtungen (120) eine Beendigung des ersten Polymerstroms (A) und dessen Wiederauslösung vor der Beendigung der Strömung des die äussere Oberflächenschicht des Teils bildenden Polymerstroms (B) zulassen.

4. Maschine nach einem der Ansprüche 1 bis 3, dadurch gekennzeichnet, dass die den Vorrichtungen (100) zugeordneten Vorrichtungen (120) es ermöglichen, dass die Innenschicht (C) durchgehend und in dem Teil völlig eingekapselt ist.

Revendications

1. Une machine de moulage à injection multicouche pour fabriquer une pièce moulée par injection multicouche, comprenant une buse de co-injection (50), des moyens (70A, 56A, 82A, 84A et 85A) d'amenée de flux d'un premier jet de polymère (A) par la buse (50), pour former une couche de surface de la pièce, des moyens (70B, 54B, 56B, 58B, 82B, 84B et 85B) d'amenée de flux d'un deuxième jet de polymère (B) qui forme l'autre couche de surface de la pièce, des moyens (70C, 54C, 56C, 58C, 82C, 84C et 85C) d'amenée du flux d'un troisième jet de polymère (C) entre les premier et deuxième jets de matière (A et B), caractérisée en ce qu'elle comprend en outre des moyens (100) d'initiation et de coordination automatiques du commencement, du débit et de la terminaison des flux desdits jets de polymères (A, B et C) au cours de chaque cycle d'injection selon une séquence déterminée à l'avance et des moyens (120) sensibles aux moyens d'initiation et de coordination (100), pour activer les moyens d'amenée que l'on peut actionner indépendamment pour engendrer la séquence déterminée à l'avance des flux des différents jets de polymères (A, B, et C).

2. Machine selon la revendication 1, caractérisée en ce que l'on peut actionner les moyens (100) pour stopper le flux du premier jet de polymère (A) avant la terminaison du deuxième jet de polymère (B).

3. Machine selon l'une quelconque des revendications 1 ou 2, caractérisée en ce que les moyens (120) associés aux moyens (100) permettent la terminaison du premier jet de polymère (A) et la ré-initiation du flux du premier jet de polymère (A) avant la terminaison du flux du jet de polymère (B) qui forme la couche de surface extérieure de la pièce.

4. Machine selon l'une quelconque des revendications 1 à 3, caractérisée en ce que les moyens (120) associés aux moyens (100) permettent à la couche interne (C) d'être continue et complétement encapsulée dans la pièce.

FIG.1

FIG.2

1

FIG. 3

2

TIME-
DISPLACEMENT
SCHEDULE

FIG.4

FIG.5

3

**0 033 333**

FIG. 6

4

FIG. 7

FIG.8    FIG.9    FIG.10    FIG.11

FIG.12    FIG.13    FIG.14    FIG.15

5

FIG. 16

FIG. 17

FIG.18

FIG. 19

FIG. 21

$\frac{O_2 c.c. \cdot mil}{M^2 \cdot atm \cdot day}$

MOISTURE CONTENT (%)

FIG.20

6